# EUROPÄISCHE PATENTSCHRIFT

(11) **EP 1 087 114 B1**
(45) Veröffentlichungstag und Bekanntmachung des Hinweises auf die Patenterteilung: **11.12.2002**
(21) Anmeldenummer: 00119467.9
(22) Anmeldetag: 15.09.2000
(51) Int. Cl.: F01N 9/00, F01N 3/027, F01N 3/029

(54) **Verfahren zur Steuerung einer Regeneration eines Partikelfilters**
Method for controlling the regeneration of a particulate filter
Méthode pour la commande de la régénération d'un filtre à particules

(30) Priorität: 22.09.1999 DE 19945372
(43) Veröffentlichungstag der Anmeldung: 28.03.2001
(73) Patentinhaber: Volkswagen Aktiengesellschaft, 38436 Wolfsburg (DE)
(72) Erfinder: Lang, Thomas, 38440 Wolfsburg (DE)
(74) Vertreter: Meyer, Enno, Dr.

(56) Entgegenhaltungen:
- DE-A- 4 303 625
- US-A- 4 974 414
- US-A- 5 287 698
- PATENT ABSTRACTS OF JAPAN vol. 009, no. 238 (M-416), 25. September 1985 (1985-09-25) & JP 60 093109 A (ISUZU JIDOSHA KK), 24. Mai 1985 (1985-05-24)

## Beschreibung

Die Erfindung betrifft ein Verfahren zur Steuerung einer Regeneration eines Partikelfilters mit den im Oberbegriff des Anspruchs 1 genannten Merkmalen.

Während eines Verbrennungsvorgangs eines Luft-Kraftstoff-Gemisches in DieselBrennkraftmaschinen von Kraftfahrzeugen entstehen unter bestimmten Betriebsbedingungen Rußpartikel, die mit dem Abgas ausgetragen werden. Eine ungehinderte Emission der Rußpartikel ist nicht nur aufgrund gestiegener gesetzlicher Bestimmungen unerwünscht, sondern kann auch zur Schädigung von in einem Abgaskanal der Diesel-Brennkraftmaschine integrierten Abgasreinigungseinrichtungen führen. So können sich beispielsweise mit zunehmender Betriebsdauer infolge einer zunehmenden Ablagerung von Rußpartikeln die NO_{X}-Speicherkatalysatoren zusetzen. Es ist daher bekannt, in dem Abgaskanal einen Partikelfilter anzuordnen, der von dem Abgas durchströmt wird und dabei Rußpartikel zurückhält.

Um ein allmähliches Zusetzen des Partikelfilters zu verhindern, muß dieser in regelmäßigen Abständen regeneriert werden. Die Regeneration erfolgt durch Oxidation mit dem im Abgas vorhandenen Sauerstoff, wobei allerdings mindestens eine Regenerationstemperatur im Bereich des Partikelfilters erreicht werden muß. Liegt die Temperatur unterhalb der Regenerationstemperatur, so ist es bekannt, beispielsweise durch motorische Maßnahmen, eine Drosselklappenregulierung oder mit Hilfe eines elektrischen Heizwiderstandes eine Temperaturerhöhung zu erzwingen. Denkbar ist aber auch, durch Zugabe von geeigneten Additiven die Regenerationstemperatur herabzusetzen, bis die Regeneration abgeschlossen ist.

Es ist ferner bekannt, eine Regenerationsnotwendigkeit derart festzulegen, daß im Turnus einer vorgegebenen Fahrzeit oder Fahrstrecke die Regeneration durchgeführt wird. Nachteilig hieran ist, daß ein tatsächlicher Beladungszustand des Partikelfilters unberücksichtigt bleibt und die jeweils gesetzte Fahrzeit oder Fahrstrecke aus Gründen der Sicherheit entsprechend niedrig gewählt wird. Damit kann es zu einer unnötigen Regeneration kommen. Neben dem im allgemeinen erhöhten Kraftstoffverbrauch müssen dann auch eine erhöhte Gefahr einer thermischen Schädigung der Abgasreinigungseinrichtung sowie Einflüsse auf das Fahrverhalten in Kauf genommen werden.

Zur Abhilfe sind Verfahren bekannt, in denen über geeignete Modelle ein Beladungswert des Partikelfilters berechnet wird. Derartige Modelle umfassen dabei Parameter wie eine Drehzahl der Diesel-Brennkraftmaschine, den Abgasgegendruck oder die Abgastemperatur. Überschreitet der Beladungswert einen vorgegebenen Grenzwert, so wird die Regeneration initiiert. Nachteilig ist allerdings, daß bei der Ermittlung des Beladungswertes nach den herkömmlichen Verfahren ein relativ hoher Fehler in Kauf genommen werden muß und daher der Grenzwert entsprechend niedrig angesetzt wird. Damit wird die Regeneration häufiger durchgeführt als eigentlich technisch notwendig ist.

US-5,287,698 beschreibt eine Abgasreinigungsvorrichtung, die einen Partikelfilter aufweist, wobei die Beladung und schließlich der Regenerationsbeginn des Filters durch eine Vielzahl von Parametern bestimmt und die Abbrennrate überwacht wird.

Der Erfindung liegt daher die Aufgabe zugrunde, ein Verfahren zur schaffen, das eine Regeneration des Partikelfilters optimaler an die tatsächlichen Begebenheiten anpaßt.

Diese Aufgabe wird erfindungsgemäß durch ein Verfahren nach Anspruch 1 gelöst. Bevorzugte Ausgestaltungen der Erfindung sind Gegenstand der Unteransprüche.

Weitere bevorzugte Ausgestaltungen der Erfindung ergeben sich aus den übrigen, in den Unteransprüchen genannten Merkmalen.
Die Erfindung wird nachfolgend in einem Ausführungsbeispiel anhand der zugehörigen Zeichnungen näher erläutert. Es zeigen:
- Figur 1: eine Anordnung eines Partikelfilters in einem Abgaskanal einer Diesel-Brennkraftmaschine und
- Figur 2: ein Flußdiagramm zur Steuerung einer Regeneration des Partikelfilters.

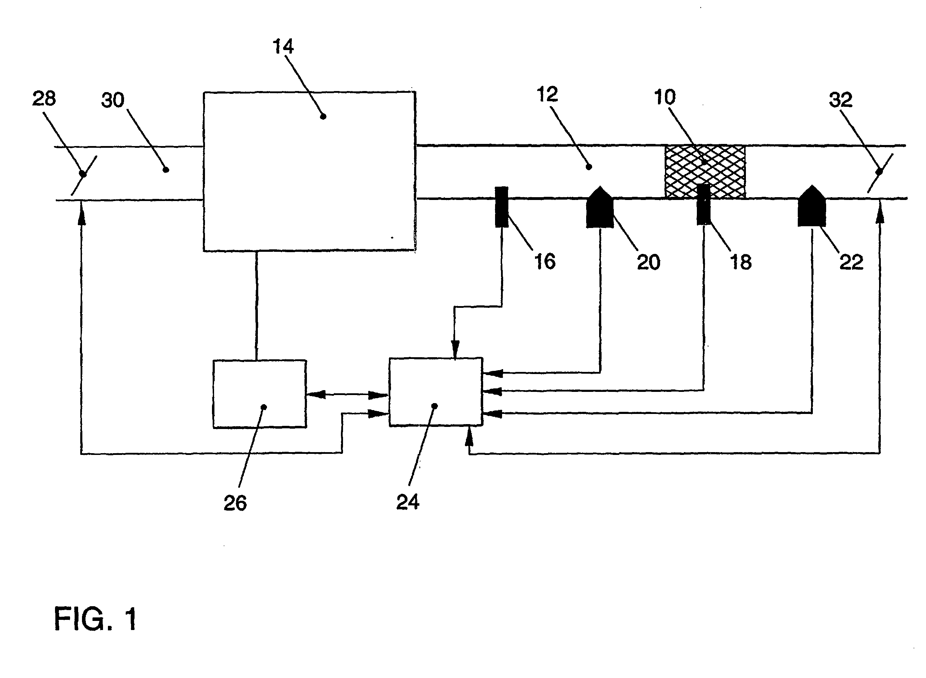

Die Figur 1 zeigt eine Anordnung eines Partikelfilters 10 in einem Abgaskanal 12 einer Diesel-Brennkraftmaschine 14 von Kraftfahrzeugen. Abgasseitig können dem Abgaskanal 12 mehrere Sensoren zugeordnet werden, wie beispielsweise Temperatursensoren 16, 18 oder Drucksensoren 20, 22. Die auf diese Weise ermittelten Größen finden Eingang in einem Motorsteuergerät 24. Über das Motorsteuergerät 24 kann in bekannter Weise beispielsweise ein Einspritzsystem 26, eine Drosselklappe 28 in einem Saugrohr 30 oder auch eine Drosselklappe 32 im Abgaskanal 12 gesteuert werden.

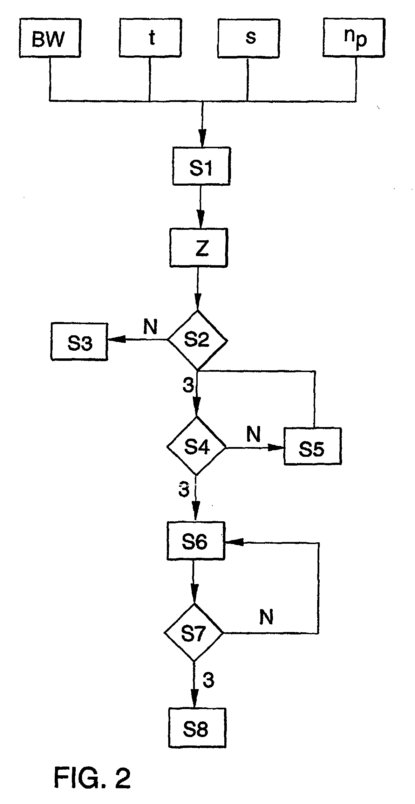

Während eines Verbrennungsvorganges eines Luft-Kraftstoff-Gemisches in der Diesel-Brennkraftmaschine 14 entstehen Rußpartikel, die in dem Partikelfilter 10 beim Durchströmen des Abgases zurückgehalten werden. Um ein Verstopfen des Partikelfilters 10 zu vermeiden, muß dieser regelmäßig regeneriert werden. Die Figur 2 zeigt ein Flußdiagramm für ein Verfahren, das eine Steuerung der Regeneration des Partikelfilters 10 erlaubt. Zunächst müssen gemäß dem Ausführungsbeispiel als Eingangsparameter ein Beladungswert BW, eine Fahrzeit t, eine Fahrstrecke s und eine Häufigkeit np eines druckabhängigen Ereignisses erfaßt werden. Diese Größen werden nachfolgend kurz erläutert.

Der Beladungswert BW ist ein Maß für die Durchflußcharakteristik des Abgases durch den Partikelfilter 10 und erhöht sich mit zunehmender Rußbeladung. Der Beladungswert BW kann dabei aus einem Modell berechnet werden, in das unter anderem eine Druckdifferenz vor und hinter dem Partikelfilter 10 einfließt. Ein Abgasgegendruck p vor dem Partikelfilter 10 kann über den Drucksensor 20 direkt erfaßt werden. Der Druck des Abgases stromab des Partikelfilters 10 ist beispielsweise über den Drucksensor 22 erfaßbar. Weiterhin müssen zur Berücksichtigung einer Dynamik dieses Modells Größen berücksichtigt werden, wie eine über den Temperatursensor 16 erfaßbare Abgastemperatur, als auch ein Luftmassenstrom oder eine Drehzahl der Diesel-Brennkraftmaschine 14. Derartige Modelle sind bekannt und sollen daher im Rahmen dieser Beschreibung nicht näher erläutert werden.

Die Fahrzeit t und die Fahrstrecke s werden beide ab dem Zeitpunkt gemessen, an dem die letzte Regeneration des Partikelfilters 10 beendet wurde. Die Integration entsprechender Meßeinrichtungen in dem Kraftfahrzeug und die Übermittlung der erfaßten Daten an das Motorsteuergerät 24 ist bekannt.
Als vierte Eingangsgröße dient eine vom Abgasgegendruck p abhängige Größe, nämlich die Häufigkeit nₚ für ein Überschreiten des Abgasgegendruckes p über einen Spitzendruck pₘₐₓ seit der letzten Regeneration des Partikelfilters 10. Wiederum kann diese Größe entweder direkt über den Drucksensor 20 erfaßt oder über ein bekanntes Modell berechnet werden.

Die erfaßten Parameter fließen in einem Schritt S1 in ein Kennfeld ein, das eine Zustandskennzahl Z liefert. Die Gewichtung der einzelnen Faktoren kann dabei motorspezifisch angepaßt werden. Insgesamt ist die Zustandskennzahl Z von allen eingeflossenen Parametern abhängig.

Überschreitet die Zustandskennzahl Z einen Zustand Kennzahl-Grenzwert GW₁, so liegt eine Regenerationsnotwendigkeit vor (Schritt S2). Im gegenteiligen Fall erfolgt ein Abbruch der Abfrage (Schritt S3), und gegebenenfalls kann das Verfahren neu initiiert werden. Die gezeigte Vorgehensweise ist besonders deshalb vorteilhaft, weil eine unnötig häufige Regeneration vermieden werden kann. Ist beispielsweise die Fahrzeit t oder die Fahrstrecke s seit der letzten Regeneration noch sehr klein, so muß der Beladungswert BW bereits sehr groß sein, um insgesamt zu einem Überschreiten der Zustandskennzahl Z über den Zustand Kennzahl-Grenzwert GW₁ zu führen.

Bei bestehender Regenerationsnotwendigkeit wird nachfolgend in einem Schritt S4 ermittelt, ob eine Temperatur T im Bereich des Partikelfilters 10 unterhalb einer notwendigen Regenerationstemperatur T_{reg} liegt. Ist dies der Fall, so wird zumindest eine Maßnahme zum Erreichen der Regenerationstemperatur T_{reg} ergriffen (Schritt S5). Derartige Maßnahmen umfassen beispielsweise einen Zusatz von Additiven, ein elektrisches Aufheizen mit einem hier nicht dargestellten Heizwiderstand im Bereich des Partikelfilters 10 oder eine Regelung der Drosselklappe 28. Selbstverständlich kann auch durch Steuerung des Verbrennungsvorgangs des Luft-Kraftstoff-Gemisches über das Einspritzsystem 26 und die Drosselklappe 28 im Saugrohr 30 die Abgastemperatur erhöht werden. Wichtig ist lediglich, daß die beispielsweise über den Temperatursensor 18 erfaßbare notwendige Regenerationstemperatur T_{reg} am Partikelfilter 10 erreicht wird, damit die Regeneration durchgeführt werden kann (Schritt S6).

Die Regenerationsparameter werden so lange aufrechterhalten, bis der Beladungswert BW unterhalb eines Beladungs-Grenzwertes GW₂, beispielsweise bei 5 bis 20%, liegt (Schritt S7). Andernfalls erfolgt in einem Schritt S8 ein Abbruch der Regeneration.

## Patentansprüche

1. Verfahren zur Steuerung einer Regeneration eines Partikelfilters, der in einem Abgaskanal einer Diesel-Brennkraftmaschine angeordnet ist,
**dadurch gekennzeichnet, daß**
(a) über ein Kennfeld oder Modell, in das ein Beladungswert BW des Partikelfilters (10) sowie eine Fahrzeit t und/oder Fahrstrecke s seit der letzten Regeneration einfließen, eine Zustandskennzahl Z ermittelt wird,
(b) beim Überschreiten der Zustandskennzahl Z über einen Zustandskennzahl-Grenzwert GW₁ eine Regenerationsnotwendigkeit vorliegt und die Regeneration durchgeführt wird, bis der Beladungswert BW des Partikelfilters (10) unterhalb eines Beladungs-Grenzwertes GW₂ liegt,
wobei in das Modell oder Kennfeld zur Ermittlung der Zustandskennzahl Z ein Abgasgegendruck p in Form einer Häufigkeit nₚ für ein Überschreiten des Abgasgegendruckes p über einen Spitzendruck pₘₐₓ seit der letzten Regeneration des Partikelfilters (10) berücksichtigt wird.

2. Verfahren nach Anspruch 1, **dadurch gekennzeichnet, daß** beim Vorliegen der Regenerationsnotwendigkeit und bei einer Temperatur T im Bereich des Partikelfilters (10) unterhalb einer notwendigen Regenerationstemperatur T_{reg} zumindest eine Maßnahme zum Erreichen der Regenerationstemperatur T_{reg} ergriffen wird.

3. Verfahren nach Anspruch 2, **dadurch gekennzeichnet, daß** die Maßnahmen zum Erreichen der Regenerationstemperatur T_{reg} einen Zusatz von Additiven, ein elektrisches Aufheizen und motorische Maßnahmen umfassen.

4. Verfahren nach einem der vorangegangenen Ansprüche, **dadurch gekennzeichnet, daß** der Beladungs-Grenzwert GW₂ für den Beladungswert BW ≤ 5 bis 20 % ist.

## Claims

1. Method for controlling a regeneration of a particle filter which is arranged in an exhaust pipe of a diesel internal-combustion engine, **characterized in that**
(a) a state characteristic variable Z is determined using a characteristic diagram or model which includes a loading value BW for the particle filter (10) and a driving time t and/or driving distance s since the last regeneration,
(b) there is a need for regeneration when the state characteristic variable Z exceeds a state characteristic variable limit value GW₁, and the regeneration is carried out until the loading value BW for the particle filter (10) is below a loading limit value GW₂,
an exhaust-gas back-pressure p, in the form of a frequency nₚ with which the exhaust-gas back-pressure p has exceeded a peak pressure pₘₐₓ since the last regeneration of the particle filter (10), being taken into account in the model or characteristic diagram for determining the state characteristic variable Z.

2. Method according to Claim 1, **characterized in that** when there is a need for regeneration and when a temperature T in the region of the particle filter (10) is below a required regeneration temperature T_{reg}, at least one measure is taken in order to reach the regeneration temperature T_{reg}.

3. Method according to Claim 2, **characterized in that** the measures for reaching the regeneration temperature T_{reg} comprise the addition of additives, electrical heating and engine measures.

4. Method according to one of the preceding claims, **characterized in that** the loading limit value GW₂ for the loading value BW is ≤ 5 to 20%.

## Revendications

1. Procédé de commande d'une régénération d'un filtre à particules, qui est disposé dans un canal de gaz d'échappement d'un moteur à combustion diesel, **caractérisé en ce que** :
a) sur un diagramme caractéristique ou un modèle, dans lequel apparaissent une valeur de charge BW du filtre à particules (10) ainsi qu'une durée de trajet t et/ou une distance parcourue s depuis la dernière régénération, on détermine un indice d'état Z,
b) lorsque l'indice d'état Z dépasse une valeur limite GW₁ de l'indice d'état, il se présente une nécessité de régénération et la régénération est effectuée jusqu'à ce que la valeur de charge BW du filtre à particules (10) se situe en dessous d'une valeur limite de charge GW₂,
dans lequel, dans le modèle ou le diagramme caractéristique permettant d'obtenir l'indice d'état Z, on tient compte d'une contre-pression p des gaz d'échappement sous la forme d'une fréquence nₚ pour un dépassement par la contre-pression p des gaz d'échappement d'une pression de pic pₘₐₓ depuis la dernière régénération du filtre à particules (10).

2. Procédé selon la revendication 1, **caractérisé en ce que**, lorsque la nécessité d'une régénération apparaît et à une température T dans la zone du filtre à particules (10) en dessous d'une température de régénération nécessaire T_{rég}, au moins une mesure est prise pour atteindre la température de régénération T_{rég}.

3. Procédé selon la revendication 2, **caractérisé en ce que** les mesures pour atteindre la température de régénération T_{rég} comprennent une addition d'additifs, un chauffage électrique et des mesures portant sur le moteur.

4. Procédé selon l'une quelconque des revendications précédentes, **caractérisé en ce que** la valeur limite de charge GW₂ pour la valeur de charge BW est inférieure ou égale à 5 à 20%.
